# EUROPEAN PATENT APPLICATION

(11) **EP 4 822 492 A1**
(43) Date of publication of application: **14.10.2026**
(21) Application number: 24899664.7
(22) Date of filing: 25.11.2024
(51) Int. Cl.: G06F 3/01, G02B 27/01

(54) **EYE TRACKING METHOD AND APPARATUS, AND HEAD-MOUNTED DISPLAY DEVICE AND STORAGE MEDIUM**

(30) Priority: 05.12.2023 CN 202311664234
(71) Applicant: Meta-Bounds Inc., Zhuhai, Guangdong 519000 (CN)
(72) Inventor: LAN, Fuyang, Zhuhai, Guangdong 519000 (CN); GUAN, Jian, Zhuhai, Guangdong 519000 (CN); MA, Guoqing, Zhuhai, Guangdong 519000 (CN)
(74) Representative: Agca Kizil, Tugce
(86) International application number: PCT/CN2024/134243
(87) International publication number: WO 2025/119023

(57) **Abstract**

The present disclosure relates to an eye-tracking method. The eye-tracking method includes: detecting and obtaining displacement detection data by a displacement detector; determining movement information of the head-mounted display device relative to a user's eyes according to the displacement detection data; and correcting calibrated spatial position data between the head-mounted display device and the eyes according to the movement information, and performing eye tracking based on the corrected spatial position data between the head-mounted display device and the eyes.

## Description

### CROSS-REFERENCE TO RELATED APPLICATIONS

This application is a National Stage of International Application No. PCT/CN2024/134243 filed on November 25, 2024, which claims priority to Chinese Patent Application No. 202311664234.1, entitled "Eye-Tracking Method, Eye-Tracking Apparatus, Head-Mounted Display Device, And Storage Medium", filed on December 5, 2023, both of which are incorporated herein by reference.

### TECHNICAL FIELD

The present disclosure relates to the technical field of eye tracking, and in particular, to an eye-tracking method, an eye-tracking apparatus, a head-mounted display device.

### BACKGROUND

As a person gazes in different directions, subtle changes occur in the eyes, which generate extractable features. These features can be captured via imaging or scanning to track eye movements in real time and trigger corresponding responses, achieving an effect of controlling a device with eyes. Taking eye-tracking glasses as an example, they consist of a frame, lenses, a light source, an image capture unit, and a computing unit, the light source and the image capture unit are mounted on the frame or lenses. The light source operates in the infrared band and is configured to supplement light for a corneal region of the eyes. The image capture unit is configured to capture light spots and iris images reflected by the corneas of the eyes. The light spots and iris images are then processed by the computing unit to determine the user's viewing direction, completing the eye-tracking process. To ensure accurate eye tracking, the spatial position data among the eyes, the light source, and the image capture unit need to be calibrated in advance. However, during actual use, the glasses often shift or tilt relative to the eyes, invalidating the original calibration data. This degrades eye-tracking accuracy and may even disable reliable eye tracking

Accordingly, improving the eye-tracking accuracy has become an urgent technical challenge to address.

### SUMMARY OF THE INVENTION

The present disclosure provides an eye-tracking method, an eye-tracking apparatus, a head-mounted display device, to improve eye-tracking accuracy.

To achieve the above objective, the present disclosure provides an eye-tracking method applied to a head-mounted display device. The eye-tracking method includes:
detecting and obtaining displacement detection data by a displacement detector;
determining movement information of the head-mounted display device relative to a user's eyes according to the displacement detection data; and
correcting calibrated spatial position data between the head-mounted display device and the eyes according to the movement information, and performing eye tracking based on the corrected spatial position data between the head-mounted display device and the eyes.

In addition, to achieve the above objective, the present disclosure further provides an eye-tracking apparatus. The eye-tracking apparatus includes a memory and a processor;
the memory is configured to store a computer program;
the processor is configured to execute the computer program and, when executing the computer program, implement the steps of the above eye-tracking method.

In addition, to achieve the above objective, the present disclosure further provides a head-mounted display device. The head-mounted display device includes the above eye-tracking apparatus.

The present disclosure discloses an eye-tracking method, an eye-tracking apparatus, a head-mounted display device. Displacement detection data is detected and obtained by a displacement detector. Movement information of a head-mounted display device relative to a user's eyes is determined according to the obtained displacement detection data. Then calibrated spatial position data between the head-mounted display device and the eyes is corrected according to the movement information, so as to perform eye tracking based on the corrected spatial position data between the head-mounted display device and the eyes. This resolves the mismatch between originally calibrated spatial positional data and actual conditions caused by shifting and tilting of the head-mounted display device relative to the eyes, thereby improving eye-tracking accuracy.

### BRIEF DESCRIPTION OF THE DRAWINGS

To describe technical solutions of embodiments of the present disclosure more clearly, the following briefly describes accompanying drawings used in the description of the embodiments. The accompanying drawings described below show some embodiments of the present disclosure. Those of ordinary skill in the art may further obtain other accompanying drawings from these accompanying drawings without creative efforts.
FIG. 1 is a schematic flowchart of an eye-tracking method according to an embodiment of the present disclosure.
FIG. 2 is a schematic structural diagram of an eye-tracking glasses according to an embodiment of the present disclosure.
FIG. 3 is a schematic flowchart of steps of determining movement information of a head-mounted display device relative to a user's eyes according to displacement detection data according to an embodiment of the present disclosure.
FIG. 4 is a schematic diagram of establishing a spatial rectangular coordinate system for a user's head according to an embodiment of the present disclosure.
FIG. 5 is a schematic diagram of displacements at a nose pad and temples before and after movement of an eye-tracking glasses according to an embodiment of the present disclosure.
FIG. 6 is a schematic flowchart of an eye-tracking method according to another embodiment of the present disclosure.
FIG. 7 is a schematic flowchart of correcting spatial position data between an eye-tracking glasses and eyes according to an embodiment of the present disclosure.
FIG. 8 is a schematic block diagram of an eye-tracking apparatus according to an embodiment of the present disclosure.

### DETAILED DESCRIPTION OF EMBODIMENTS

The following clearly and completely describes the technical solutions in the embodiments of the present disclosure with reference to the accompanying drawings. The described embodiments are some embodiments of the present disclosure rather than all of the embodiments. All other embodiments obtained by those of ordinary skill in the art based on the embodiments of the present disclosure without creative efforts shall fall within the protection scope of the present disclosure.

The flowcharts shown in the accompanying drawings are for illustrative purposes and do not have to include all contents and operations/steps, nor do they have to be performed in the described order. For example, some operations/steps may be decomposed, combined, or partially combined, so an actual execution order may be changed according to actual situations.

It should be understood that terms used in the specification of the present disclosure are for describing embodiments and are not intended to limit the present disclosure. As used in the specification and appended claims of the present disclosure, singular forms "a", "an", and "the" are intended to include plural forms unless the context clearly dictates otherwise.

It should also be understood that the term "and/or" used in the specification and appended claims of the present disclosure refers to any combination and all possible combinations of one or more of the associated listed items, and includes these combinations.

An eye-tracking glasses generally consists of a frame, lenses, a light source, an image capture unit, and a computing unit, the light source and the image capture unit are mounted on the frame or lenses. The light source operates in the infrared band and is configured to supplement light for a corneal region of the eyes. The image capture unit is configured to capture light spots and iris images reflected by the corneas of the eyes. The light spots and iris images are then processed by the computing unit to determine the user's viewing direction, completing the eye-tracking process. To ensure accurate eye tracking, the spatial position data among the eyes, the light source, and the image capture unit need to be calibrated in advance. However, during actual use, the glasses often shift or tilt relative to the eyes, invalidating the original calibration data. This degrades eye-tracking accuracy and may even disable reliable eye tracking

To resolve the above problem, embodiments of the present disclosure provide an eye-tracking method, an eye-tracking apparatus, a head-mounted display device, and a storage medium, configured to improve eye-tracking accuracy.

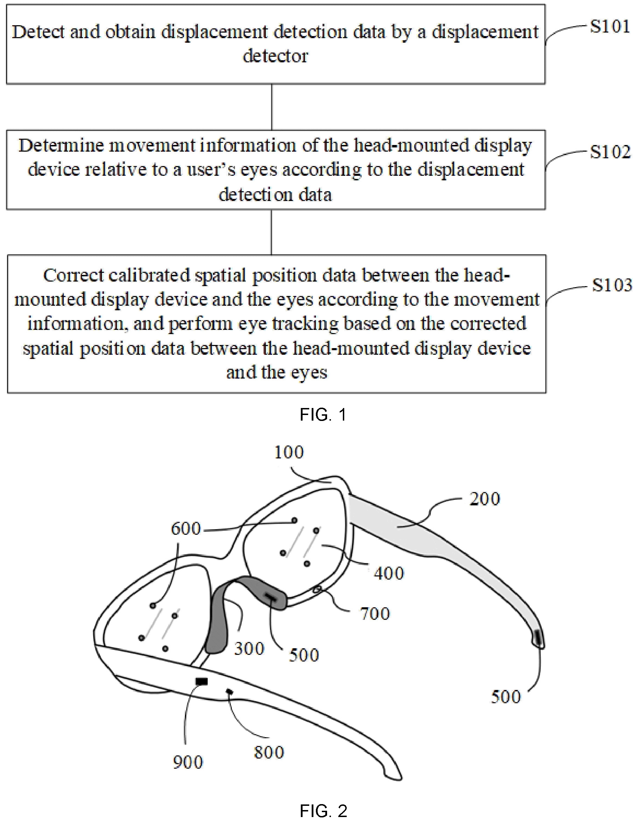

With reference to FIG. 1, FIG. 1 is a schematic flowchart of an eye-tracking method according to an embodiment of the present disclosure. The eye-tracking method may be applied to a head-mounted display device, in which the head-mounted display device includes, but is not limited to, an eye-tracking glasses, an AR (Augmented Reality) glasses, a VR (Virtual Reality) glasses, and other devices. The present disclosure does not limit an application scenario of the eye-tracking method.

With reference to FIG. 1, the eye-tracking method includes steps S101 to S103.

S101. Detect and obtain displacement detection data by a displacement detector.

In some embodiments, the displacement detection data includes displacement vector data such as a movement direction and a movement amount. The displacement detector includes, but is not limited to, a displacement sensor. The displacement sensor may be a mechanical motion displacement sensor or an optical displacement sensor.

In some embodiments, there is at least one displacement detector such as at least one displacement sensor. Each displacement detector is disposed at a detection position of the head-mounted display device; and the user contacts the detection position when wearing the head-mounted display device.

Taking an eye-tracking glasses as an example, with reference to FIG. 2, the eye-tracking glasses includes a frame 100, temples 200, a nose pad 300, lenses 400, a displacement sensor 500, a light-spot array unit 600, an image capture unit 700, a memory unit 800, a computing unit 900, a power supply (not shown in the figure), and the like.

The displacement sensor 500 is located at the nose pad 300 and/or the temples 200 that are in direct contact with a human body. In some embodiments, an inner side of the nose pad 300 is used as a detection position, and the displacement sensor 500 is located at the inner side of the nose pad 300, that is, at a side close to a bridge of the user's nose. It may be understood that the displacement sensor 500 may be disposed at inner sides of both left and right parts of the nose pad 300, or the displacement sensor 500 may be disposed at an inner side of one part of the nose pad 300.

In other embodiments, a side of tail ends of the temples 200 close to the user's head is used as a detection position, and the displacement sensor 500 is located at the side of the tail ends of the temples 200 close to the user's head. It may be understood that the displacement sensor 500 may be disposed at inner sides of tail ends of both left and right temples 200, or the displacement sensor 500 may be disposed at an inner side of a tail end of one temple 200.

The light-spot array unit 600 may be located on the lenses 400, with reference to FIG. 2. In other embodiments, the light-spot array unit 600 may also be located at other positions such as the frame 100, which is not limited herein. The light-spot array unit 600 operates in an infrared band and is configured to supplement light for a corneal region of the eyes.

In some embodiments, the image capture unit 700 is disposed on the frame 100, with reference to FIG. 2. The image capture unit is configured to capture light spots and iris images of the eyes reflected by the corneas of the eyes.

The memory unit 800, the computing unit 900, the power supply, and the like are disposed on the temples 200. They may also be located at other positions such as the frame 100, which is not limited herein. The memory unit 800 and the computing unit 900 are configured to store the light spots and the iris images of the eyes and perform calculation to obtain the viewing direction of the eyes.

In some embodiments, mechanical motion displacement sensors are disposed at sides of both left and right parts of the nose pad 300 close to the bridge of the user's nose. The mechanical motion displacement sensors are configured to determine whether the nose pad 300 moves and calculate a movement direction and a movement amount of the nose pad 300 based on a rotation angle of a ball or a roller. Since the nose pad 300 is in close contact with the bridge of the user's nose, when the nose pad 300 moves relative to the bridge of the user's nose, the roller or the ball on the mechanical motion displacement sensor rotates. Therefore, the mechanical motion displacement sensor may calculate the movement direction and the movement amount of the nose pad 300 relative to the eyes by detecting a rotation direction and rotation angle of the ball or the roller.

In some embodiments, optical displacement sensors are disposed at sides of both left and right parts of the nose pad 300 close to the bridge of the user's nose. Each optical displacement sensor has a light source and an image sensor. The light source operates in an eye-insensitive band such as infrared to reduce visual interference to the user. After the light source illuminates skin of the bridge of the nose, the image sensor images the skin of the bridge of the nose. The image is analyzed and processed to obtain a movement direction and a movement amount of the optical displacement sensor relative to the skin, that is, a movement state of the nose pad 300 relative to the eyes may be obtained. Since an optical displacement sensor has better accuracy and response speed than a mechanical motion displacement sensor, the optical displacement sensor provides a better correction effect.

In daily wearing, movement of the glasses relative to the eyes is not simple translation but accompanied by rotation of the glasses. Therefore, it may be difficult to accurately describe a complex movement state of the glasses by the position sensor 500 on the nose pad 300. In some embodiments, the displacement sensor 500 is disposed not only at sides of both left and right parts of the nose pad 300 close to the bridge of the user's nose, but also at positions of tail ends of the temples 200 close to two sides of the user's head. After the displacement sensor 500 is added to the temples 200, a movement direction and a movement amount of the glasses relative to the eyes may be accurately described based on movement states at two positions, namely the nose pad 300 and the tail ends of the temples 200 on the glasses.

S102. Determine movement information of the head-mounted display device relative to a user's eyes according to the displacement detection data.

In some embodiments, the movement information includes at least one of a translation vector and a rotation angle. A translation vector and/or a rotation angle of the head-mounted display device relative to the user's eyes is determined according to data such as a movement direction and a movement amount detected and obtained by a displacement detector such as a displacement sensor.

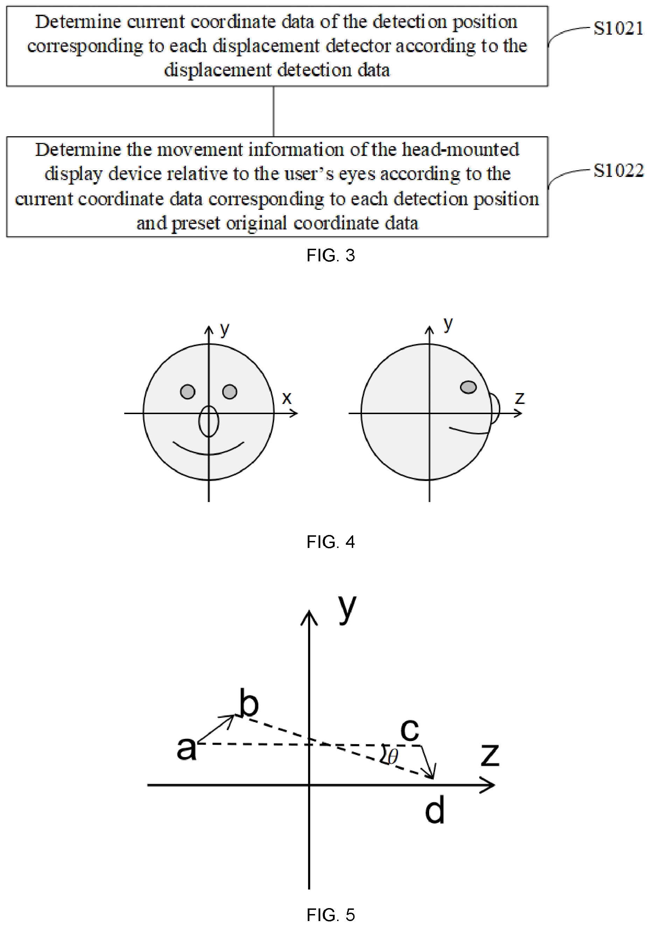

In some embodiments, with reference to FIG. 3, step S102 may include sub-steps S1021 and S1022.

S1021. Determine current coordinate data of the detection position corresponding to each displacement detector according to the displacement detection data.

S1022. Determine the movement information of the head-mounted display device relative to the user's eyes according to the current coordinate data corresponding to each detection position and preset original coordinate data.

In some embodiments, for each displacement detector, initial original coordinate data may be preset for each displacement detector, that is, original coordinate data of a corresponding detection position. Displacement vector data, such as a movement direction and a movement amount, is detected and obtained by each displacement detector, and the displacement vector data is added to corresponding original coordinate data to obtain current coordinate data of the detection position corresponding to each displacement detector.

Then, a translation vector and/or a rotation angle of the head-mounted display device relative to the user's eyes is determined according to the current coordinate data corresponding to each detection position and the corresponding original coordinate data.

With reference to FIG. 2, taking the eye-tracking glasses as an example, first original coordinate data is preset for a detection position corresponding to the displacement sensor 500 disposed at a side of tail ends of the temples 200 close to the user's head, and second original coordinate data is preset for a detection position corresponding to the displacement sensor 500 disposed at a side of the nose pad 300 close to the bridge of the user's nose.

In some embodiments, a spatial rectangular coordinate system is established for the user's head, with reference to FIG. 4. It may be known from an actual wearing state of the eye-tracking glasses that the eye-tracking glasses translates or rotates relative to the eyes almost only in a y-z plane. Therefore, the first original coordinate data of the detection position corresponding to the displacement sensor 500 at the temples 200 may be set to (yₐ, zₐ), and the second original coordinate data of the detection position corresponding to the displacement sensor 500 at the nose pad 300 may be set to (y_{c}, z_{c}).

A corresponding movement direction and a corresponding movement amount are detected by the displacement sensor 500 at the temples 200, and a corresponding movement direction and a corresponding movement amount are detected by the displacement sensor 500 at the nose pad 300. For example, FIG. 5 shows movement directions and movement amounts detected by the displacement sensor 500 at the nose pad 300 and the displacement sensor 500 at the temples 200 before and after movement of the eye-tracking glasses. A vector *̅a̅b̅*̅ represents a displacement (first displacement vector data) of the temples 200, and a vector *̅c̅d̅*̅ represents a displacement (second displacement vector data) of the nose pad 300. *ac* is a connecting line between the temples 200 and the nose pad 300 before movement of the eye-tracking glasses, and *bd* is a connecting line between the temples 200 and the nose pad 300 after movement of the eye-tracking glasses. It can be seen that an angle *θ* is formed between *ac* and *bd* after movement of the eye-tracking glasses, that is, the eye-tracking glasses rotates.

First current coordinate data (y_{b}, z_{b}) of the detection position corresponding to the displacement sensor 500 at the temples 200 is obtained based on the first original coordinate data (yₐ, zₐ) and the first displacement vector data *̅a̅b̅*̅. Second current coordinate data (y_{d}, z_{d}) of the detection position corresponding to the displacement sensor 500 at the nose pad 300 is obtained based on the second original coordinate data (y_{c}, z_{c}) and the second displacement vector data *̅c̅d̅*̅.

Then, a translation vector and a rotation angle of the eye-tracking glasses relative to the user's eyes are obtained according to the first original coordinate data (yₐ, zₐ) and the first current coordinate data (y_{b}, z_{b}), as well as the second original coordinate data (y_{c}, z_{c}) and the second current coordinate data (y_{d}, z_{d}).

In some embodiments, the step of determining the translation vector and/or the rotation angle corresponding to movement of the head-mounted display device relative to the user's eyes according to the current coordinate data and the original coordinate data includes:
substituting the current coordinate data and the original coordinate data into a formula *A1* = *R(θ)* × *A0* + *T*, to calculate the rotation angle and the translation vector;
in which *A1* is the current coordinate data, *A0* is the original coordinate data, *R(θ)* is a rotation matrix, *θ* is the rotation angle, and *T* is the translation vector.

In some embodiments, the rotation matrix *R(θ)* is: $R \left(θ\right) = \left(\begin{matrix}cosθ & - sinθ \\ sinθ & cosθ\end{matrix}\right)$

In some embodiments, in the y-z plane, the translation vector *T* is (t_{y}, t_{z})^{T}.

For example, with reference to FIG. 5, *A0* is a matrix corresponding to the first original coordinate data (yₐ, zₐ) and the second original coordinate data (y_{c}, z_{c}): $A 0 = \left[\begin{matrix}{y}_{a} & {y}_{c} \\ {z}_{a} & {z}_{c}\end{matrix}\right]$

*A1 is a matrix corresponding to the first* current *coordinate data* (y_{b}, z_{b}) and the second current coordinate data (y_{d}, z_{d}): $A 1 = \left[\begin{matrix}{y}_{b} & {y}_{d} \\ {z}_{b} & {z}_{d}\end{matrix}\right]$

*A0* and *A1* are substituted into the formula: $\left[\begin{matrix}{y}_{b} & {y}_{d} \\ {z}_{b} & {z}_{d}\end{matrix}\right] = \left(\begin{matrix}cosθ & - sinθ \\ sinθ & cosθ\end{matrix}\right) * \left[\begin{matrix}{y}_{a} & {y}_{c} \\ {z}_{a} & {z}_{c}\end{matrix}\right] + {\left({t}_{y}, {t}_{z}\right)}^{T}$ t*_{y}*, t*_{z}*, and *θ* may be calculated.

In other embodiments, the displacement sensor 500 is disposed at positions of tail ends of both left and right temples 200 close to the user's head, and the displacement sensor 500 is disposed at sides of both left and right parts of the nose pad 300 close to the bridge of the user's nose. Before movement of the eye-tracking glasses, original coordinate data corresponding to detection positions of the displacement sensors 500 at the left and right temples 200 are determined as (y*ₐ₁*, z*ₐ₁*) and (y*ₐ₂*, z*ₐ₂*) respectively, and original coordinate data corresponding to detection positions of the displacement sensors 500 at the left and right parts of the nose pad 300 are determined as (y*_{c1}*, z*_{c1}*) and (y*_{c2}*, z*_{c2}*) respectively. After movement of the eye-tracking glasses, current coordinate data corresponding to detection positions of the displacement sensors 500 at the left and right temples 200 are determined as (y*_{b1}*, z*_{b1}*) and (y*_{b2}*, z*_{b2}*) respectively, and current coordinate data corresponding to detection positions of the displacement sensors 500 at the left and right parts of the nose pad 300 are determined as (y*_{d1}*, z*_{d1}*) and (y*_{d2}*, z*_{d2}*) respectively in the foregoing manner.

*A0* is the matrix of the original coordinate data (y*ₐ₁*, z*a1*) and (y*ₐ₂*, z*ₐ₂*) of the detection positions corresponding to the displacement sensors at the left and right temples 200, as well as the original coordinate data (y*_{c1}*, z*_{c1}*) and (y*_{c2}*, z*_{c2}*) of the detection positions corresponding to the displacement sensors on the left and right sides of the nose pad 300: $A 0 = \left[\begin{matrix}{y}_{a 1} & {y}_{c 1} & {y}_{a 2} & {y}_{c 2} \\ {z}_{a 1} & {z}_{c 1} & {z}_{a 2} & {z}_{c 2}\end{matrix}\right]$

*A1* is the matrix of the current coordinate data (y*_{b1}*, z*_{b1}*) and (y*_{b2}*, z*_{b2}*) of the detection positions corresponding to the displacement sensors 500 at the left and right temples 200, as well as the current coordinate data (y*_{d1}*, z*_{d1}*) and (y*_{d2}*, z*_{d2}*) of the detection positions corresponding to the displacement sensors 500 on the left and right sides of the nose pad 300: $A 1 = \left[\begin{matrix}{y}_{b 1} & {y}_{d 1} & {y}_{b 2} & {y}_{d 2} \\ {z}_{b 1} & {z}_{d 1} & {z}_{b 2} & {z}_{d 2}\end{matrix}\right]$

*A0* and *A1* are substituted into the formula: $\left[\begin{matrix}{y}_{b 1} & {y}_{d 1} & {y}_{b 2} & {y}_{d 2} \\ {z}_{b 1} & {z}_{d 1} & {z}_{b 2} & {z}_{d 2}\end{matrix}\right] = R \left(θ\right) * \left[\begin{matrix}{y}_{a 1} & {y}_{c 1} & {y}_{a 2} & {y}_{c 2} \\ {z}_{a 1} & {z}_{c 1} & {z}_{a 2} & {z}_{c 2}\end{matrix}\right] + T$

The translation vector *T* and the rotation matrix *R(θ)* may be calculated, that is, ty, tz, and *θ* are obtained.

In other embodiments, two displacement sensors 500 may be disposed at left and right parts of the nose pad 300 and one displacement sensor 500 may be disposed at one temple 200. In other embodiments, one displacement sensor 500 may be disposed at one part of the nose pad 300 and two displacement sensors 500 may be disposed at left and right temples 200. Multiple pairs of original coordinate data and current coordinate data corresponding to before and after movement of the eye-tracking glasses are obtained in a same manner, and corresponding t*_{y}*, t*_{z}*, and *θ* are obtained according to the multiple pairs of original coordinate data and current coordinate data. For the detailed implementation, reference may be made to the content described in the foregoing embodiment, which is not described herein again.

S103. Correct calibrated spatial position data between the head-mounted display device and the eyes according to the movement information, and perform eye tracking based on the corrected spatial position data between the head-mounted display device and the eyes.

For example, taking the eye-tracking glasses as an example, after movement information is obtained, calibrated spatial position data between the eye-tracking glasses and the eyes is corrected according to the obtained movement information, so as to overcome a problem that originally calibrated spatial position data is inconsistent with actual conditions due to movement and tilting of the eye-tracking glasses relative to the eyes. Eye tracking is performed based on the corrected spatial position data between the eye-tracking glasses and the eyes, which ensures eye-tracking accuracy and thereby guarantees effective tracking.

In some embodiments, the correcting calibrated spatial position data between the head-mounted display device and the eyes according to the movement information includes:
correcting calibrated spatial position data between the image capture unit and the eyes according to the translation vector and/or the rotation angle.

For example, taking the eye-tracking glasses as an example, the eye-tracking glasses includes the light-spot array unit 600 and the image capture unit 700. Spatial position data between the eye-tracking glasses and the eyes is calibrated in advance, including but not limited to spatial position data between the image capture unit 700 and the eyes, spatial position data between the light-spot array unit 600 and the eyes, and the like.

When the eye-tracking glasses translates without rotating, calibrated spatial position data between the image capture unit 700 and the eyes is corrected according to the translation vector. Alternatively, calibrated spatial position data between the light-spot array unit 600 and the eyes is corrected according to the translation vector. Alternatively, both calibrated spatial position data between the light-spot array unit 600 and the eyes and calibrated spatial position data between the image capture unit 700 and the eyes are corrected according to the translation vector.

When the eye-tracking glasses rotates without translating, calibrated spatial position data between the image capture unit 700 and the eyes is corrected according to the rotation angle. Alternatively, calibrated spatial position data between the light-spot array unit 600 and the eyes is corrected according to the rotation angle. Alternatively, both calibrated spatial position data between the light-spot array unit 600 and the eyes and calibrated spatial position data between the image capture unit 700 and the eyes are corrected according to the rotation angle.

When the eye-tracking glasses both translates and rotates, calibrated spatial position data between the image capture unit 700 and the eyes is corrected according to the translation vector and the rotation angle. Alternatively, calibrated spatial position data between the light-spot array unit 600 and the eyes is corrected according to the translation vector and the rotation angle. Alternatively, both calibrated spatial position data between the light-spot array unit 600 and the eyes and calibrated spatial position data between the image capture unit 700 and the eyes are corrected according to the translation vector and the rotation angle.

In some embodiments, if the translation vector *T* and the rotation matrix *R(θ)* are calculated, and calibrated spatial position data between the image capture unit 700 and the eyes is (x₀, y₀, z₀), the calibrated spatial position data (x₀, y₀, z₀) between the image capture unit 700 and the eyes is corrected based on the translation vector *T* and the rotation matrix *R(θ)*. Corrected spatial position data between the image capture unit 700 and the eyes is (x₀, y1, z1), the formula is: $\left[\begin{matrix}{y}_{1} \\ {z}_{1}\end{matrix}\right] = R \left(θ\right) * \left[\begin{matrix}{y}_{0} \\ {z}_{0}\end{matrix}\right] + T$

Calibrated spatial position data between the light-spot array unit 600 and the eyes may be corrected based on the translation vector *T* and the rotation matrix *R(θ)*. For the detailed implementation, reference may be made to the operation of correcting spatial position data between the image capture unit 700 and the eyes, which is not described herein again.

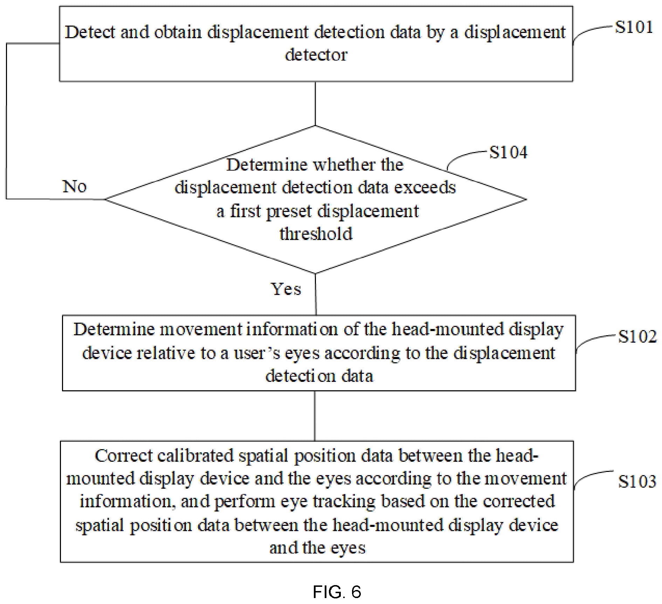

In some embodiments, with reference to FIG. 6, step S104 may be included after step S101.

S104. Determine whether the displacement detection data exceeds a first preset displacement threshold; if yes, perform step S102; if no, continue to perform step S101.

In some embodiments, a detection period may be preset, for example, a detection period of 2s, and a first preset displacement threshold corresponding to a movement magnitude of the head-mounted display device may be set. It should be noted that values of the detection period and the preset displacement threshold may be flexibly set according to actual situations, and are not limited.

Based on the preset detection period, displacement detection data is periodically detected and obtained by a displacement detector such as a displacement sensor. After displacement detection data is obtained each time, the currently obtained displacement detection data is compared with the first preset displacement threshold to determine whether the currently obtained displacement detection data exceeds the first preset displacement threshold. If the currently obtained displacement detection data does not exceed the first preset displacement threshold, it indicates that a movement magnitude of the head-mounted display device is small, and calibrated spatial position data between the head-mounted display device and the eyes does not need to be corrected. And, a cyclic operation of periodically detecting and obtaining displacement detection data by a displacement detector such as a displacement sensor is continued to be performed based on the preset detection period.

If the currently obtained displacement detection data exceeds the first preset displacement threshold, it indicates that a movement magnitude of the head-mounted display device is large, and calibrated spatial position data between the head-mounted display device and the eyes needs to be corrected. And, movement information of the head-mounted display device relative to the user's eyes is determined according to the currently obtained displacement detection data, and then calibrated spatial position data between the head-mounted display device and the eyes is corrected according to the movement information. For the detailed implementation, reference may be made to the content described in the foregoing embodiment, which is not described herein again.

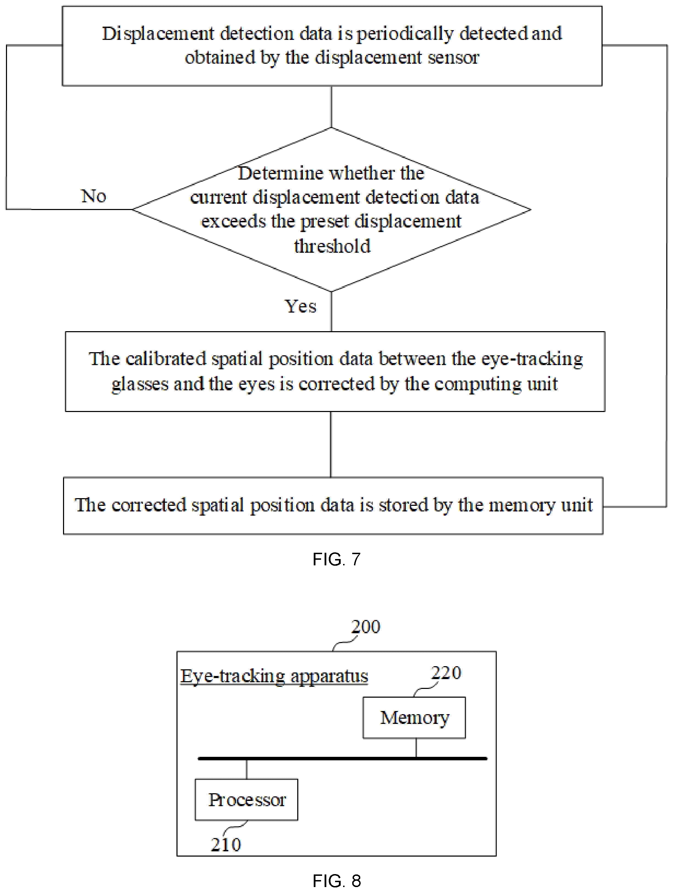

For example, taking the eye-tracking glasses as an example, with reference to FIG. 7, based on the preset detection period, displacement detection data is periodically detected and obtained by the displacement sensor 500 disposed on the eye-tracking glasses. After displacement detection data is obtained each time, the currently obtained displacement detection data is compared with the first preset displacement threshold to determine whether the currently obtained displacement detection data exceeds the first preset displacement threshold. If the currently obtained displacement detection data does not exceed the first preset displacement threshold, continue to perform an operation of periodically detecting and obtaining displacement detection data by the displacement sensor 500. If the currently obtained displacement detection data exceeds the first preset displacement threshold, movement information of the eye-tracking glasses relative to the user's eyes is calculated by the computing unit 900 according to the displacement detection data. Calibrated spatial position data between the eye-tracking glasses and the eyes is corrected according to the movement information, and the corrected spatial position data between the eye-tracking glasses and the eyes is stored by the memory unit 800. Then continue to perform the operation of periodically detecting and obtaining displacement detection data by the displacement sensor 500 again.

In some embodiments, after detecting and obtaining displacement detection data by a displacement detector, the eye-tracking method further includes:
outputting error warning information when the displacement detection data exceeds a second preset displacement threshold, in which the second preset displacement threshold is greater than the first preset displacement threshold.

In some embodiments, a second preset displacement threshold corresponding to a movement magnitude of the head-mounted display device may be preset, the second preset displacement threshold is greater than the first preset displacement threshold. It should be noted that a value of the second preset displacement threshold may be flexibly set according to actual situations, and is not limited.

After displacement detection data is detected and obtained by the displacement detector of the head-mounted display device, when the displacement detection data exceeds the second preset displacement threshold, it indicates that a movement magnitude of the head-mounted display device is large. In this case, eye tracking using the head-mounted display device is unreliable. And, the head-mounted display device outputs corresponding error warning information, which may remind the user to wear the head-mounted display device properly again.

In some embodiments, the error warning information includes, but is not limited to, prompt information such as voice, text, image, and video. For example, when the displacement detection data exceeds the second preset displacement threshold, voice prompt information such as "Please wear the head-mounted display device properly again" is output. In other embodiments, the head-mounted display device sends instant reminder information to a related device (such as a user's smartphone, smart bracelet, or the like).

Taking the eye-tracking glasses as an example, displacement detection data is periodically detected and obtained by the displacement sensor 500 disposed on the eye-tracking glasses. After displacement detection data is obtained each time, if the currently obtained displacement detection data exceeds the second preset displacement threshold, error warning information is output. For example, the eye-tracking glasses outputs voice prompt information "Please wear the eye-tracking glasses properly again", so that the user may be promptly reminded to wear the eye-tracking glasses properly again.

In some embodiments, displacement detection data is detected and obtained by a displacement detector. Movement information of a head-mounted display device relative to a user's eyes is determined according to the obtained displacement detection data. Then calibrated spatial position data between the head-mounted display device and the eyes is corrected according to the movement information, so as to perform eye tracking based on the corrected spatial position data between the head-mounted display device and the eyes. This resolves the mismatch between originally calibrated spatial positional data and actual conditions caused by shifting and tilting of the head-mounted display device relative to the eyes, thereby improving eye-tracking accuracy.

With reference to FIG. 8, FIG. 8 is a schematic block diagram of an eye-tracking apparatus according to an embodiment of the present disclosure. The eye-tracking apparatus may be configured in a head-mounted display device and configured to perform the foregoing eye-tracking method.

With reference to FIG. 8, the eye-tracking apparatus 200 may include a processor 210 and a memory 220, the processor 210 is connected to the memory 220 through a bus such as an I2C (Inter-integrated Circuit) bus.

In some embodiments, the processor 210 may be a micro-controller unit (MCU), a central processing unit (CPU), a digital signal processor (DSP), or the like.

In some embodiments, the memory 220 may be a Flash chip, a read-only memory (ROM), a magnetic disk, an optical disc, a USB flash drive, a mobile hard disk, or the like. The memory 220 stores various computer programs for execution by the processor 210.

The processor 210 is configured to run a computer program stored in the memory and, when executing the computer program, implement the following steps:
detecting and obtaining displacement detection data by a displacement detector;
determining movement information of the head-mounted display device relative to a user's eyes according to the displacement detection data; and
correcting calibrated spatial position data between the head-mounted display device and the eyes according to the movement information, and performing eye tracking based on the corrected spatial position data between the head-mounted display device and the eyes.

In some embodiments, there is at least one displacement detector. Each displacement detector is disposed at a detection position of the head-mounted display device; and the user contacts the detection position when wearing the head-mounted display device.

In some embodiments, when determining movement information of the head-mounted display device relative to a user's eyes according to the displacement detection data, the processor 210 is configured to implement:
determining current coordinate data of the detection position corresponding to each displacement detector according to the displacement detection data; and
determining the movement information of the head-mounted display device relative to the user's eyes according to the current coordinate data corresponding to each detection position and preset original coordinate data.

In some embodiments, the movement information includes at least one of a translation vector and a rotation angle. When determining the movement information of the head-mounted display device relative to the user's eyes according to the current coordinate data corresponding to each detection position and preset original coordinate data, the processor 210 is configured to implement:
determining the translation vector and/or the rotation angle corresponding to movement of the head-mounted display device relative to the user's eyes according to the current coordinate data and the original coordinate data.

In some embodiments, when determining the translation vector and/or the rotation angle corresponding to movement of the head-mounted display device relative to the user's eyes according to the current coordinate data and the original coordinate data, the processor 210 is configured to implement:
substituting the current coordinate data and the original coordinate data into a formula *A1* = *R(θ)* × *A0* + *T* to calculate the rotation angle and the translation vector;
in which *A1* is the current coordinate data, *A0* is the original coordinate data, *R(θ)* is a rotation matrix, *θ* is the rotation angle, and *T* is the translation vector.

In some embodiments, the head-mounted display device includes an image capture unit. The movement information includes at least one of a translation vector and a rotation angle. When correcting calibrated spatial position data between the head-mounted display device and the eyes according to the movement information, the processor 210 is configured to implement:
correcting calibrated spatial position data between the image capture unit and the eyes according to the translation vector and/or the rotation angle.

In some embodiments, after detecting and obtaining displacement detection data by a displacement detector, the processor 210 is configured to implement:
determining whether the displacement detection data exceeds a preset displacement threshold;
performing the step of determining movement information of the head-mounted display device relative to a user's eyes according to the displacement detection data when the displacement detection data exceeds the preset displacement threshold; and
continuing to perform the step of detecting and obtaining displacement detection data by a displacement detector when the displacement detection data does not exceed the preset displacement threshold.

In some embodiments, after detecting and obtaining displacement detection data by a displacement detector, the processor 210 is configured to implement:
outputting error warning information when the displacement detection data exceeds a second preset displacement threshold, in which the second preset displacement threshold is greater than the first preset displacement threshold.

The eye-tracking apparatus 200 may perform the eye-tracking method provided in the embodiments of the present disclosure, and may achieve beneficial effects that can be achieved by the eye-tracking method provided in the embodiments of the present disclosure. For details, reference may be made to the foregoing embodiments, which is not described herein again.

An embodiment of the present disclosure further provides a head-mounted display device. The head-mounted display device includes an eye-tracking apparatus, and the eye-tracking apparatus may be the eye-tracking apparatus 200 shown in FIG. 8. Therefore, the head-mounted display device may achieve beneficial effects that can be achieved by the eye-tracking method provided in the embodiments of the present disclosure. For details, reference may be made to the foregoing embodiments, which is not described herein again.

An embodiment of the present disclosure further provides a computer-readable storage medium. A computer program is stored on the computer-readable storage medium, and the computer program, when executed by a processor, implements the steps of the foregoing eye-tracking method.

The computer-readable storage medium may be an internal memory unit of the eye-tracking apparatus or the head-mounted display device described in the foregoing embodiment, such as a hard disk or a memory of the eye-tracking apparatus or the head-mounted display device. The computer-readable storage medium may also be an external storage device of the eye-tracking apparatus or the head-mounted display device, such as a plug-in hard disk, a smart media card (SMC), a secure digital (SD) card, a flash card, or the like equipped on the eye-tracking apparatus or the head-mounted display device.

Since a computer program stored in the storage medium may perform any eye-tracking method provided in the embodiments of the present disclosure, the computer program may achieve beneficial effects that can be achieved by any eye-tracking method provided in the embodiments of the present disclosure. For details, reference may be made to the foregoing embodiments, which is not described herein again.

It should be noted that in this document, the terms "include", "comprise", or any other variation thereof are intended to cover a non-exclusive inclusion, such that a process, method, article, or system that includes a list of elements not only includes those elements but also includes other elements not expressly listed or inherent to such process, method, article, or system. Without further limitation, an element defined by the statement "including a ..." does not exclude the presence of other identical elements in the process, method, article, or system that includes the element.

The foregoing descriptions are some implementations of the present disclosure, but the protection scope of the present disclosure is not limited thereto. Any variation or replacement that may be readily conceived by a person skilled in the art within the technical scope disclosed by the present disclosure shall fall within the protection scope of the present disclosure.

## Claims

1. An eye-tracking method, applied to a head-mounted display device, wherein the eye-tracking method comprises:
detecting and obtaining displacement detection data by a displacement detector;
determining movement information of the head-mounted display device relative to a user's eyes according to the displacement detection data; and
correcting calibrated spatial position data between the head-mounted display device and the eyes according to the movement information, and performing eye tracking based on the corrected spatial position data between the head-mounted display device and the eyes.

2. The eye-tracking method according to claim 1, wherein there is at least one displacement detector, each displacement detector is disposed at a detection position of the head-mounted display device; and the user contacts the detection position when wearing the head-mounted display device.

3. The eye-tracking method according to claim 2, wherein the determining movement information of the head-mounted display device relative to a user's eyes according to the displacement detection data comprises:
determining current coordinate data of the detection position corresponding to each displacement detector according to the displacement detection data; and
determining the movement information of the head-mounted display device relative to the user's eyes according to the current coordinate data corresponding to each detection position and preset original coordinate data.

4. The eye-tracking method according to claim 3, wherein the movement information comprises at least one of a translation vector and a rotation angle;
the determining the movement information of the head-mounted display device relative to the user's eyes according to the current coordinate data corresponding to each detection position and preset original coordinate data comprises:
determining the translation vector and/or the rotation angle corresponding to movement of the head-mounted display device relative to the user's eyes according to the current coordinate data and the original coordinate data.

5. The eye-tracking method according to claim 4, wherein the determining the translation vector and/or the rotation angle corresponding to movement of the head-mounted display device relative to the user's eyes according to the current coordinate data and the original coordinate data comprises:
substituting the current coordinate data and the original coordinate data into a formula *A1 = R(θ)* × *A0 + T* to calculate the rotation angle and the translation vector;
wherein *A1* is the current coordinate data, *A0* is the original coordinate data, *R(θ)* is a rotation matrix, *θ* is the rotation angle, and *T* is the translation vector.

6. The eye-tracking method according to claim 1, wherein the head-mounted display device comprises an image capture unit, the movement information comprises at least one of a translation vector and a rotation angle;
the correcting calibrated spatial position data between the head-mounted display device and the eyes according to the movement information comprises:
correcting calibrated spatial position data between the image capture unit and the eyes according to the translation vector and/or the rotation angle.

7. The eye-tracking method according to claim 2, wherein the head-mounted display device comprises an image capture unit, the movement information comprises at least one of a translation vector and a rotation angle;
the correcting calibrated spatial position data between the head-mounted display device and the eyes according to the movement information comprises:
correcting calibrated spatial position data between the image capture unit and the eyes according to the translation vector and/or the rotation angle.

8. The eye-tracking method according to claim 3, wherein the head-mounted display device comprises an image capture unit, the movement information comprises at least one of a translation vector and a rotation angle;
the correcting calibrated spatial position data between the head-mounted display device and the eyes according to the movement information comprises:
correcting calibrated spatial position data between the image capture unit and the eyes according to the translation vector and/or the rotation angle.

9. The eye-tracking method according to claim 4, wherein the head-mounted display device comprises an image capture unit, the movement information comprises at least one of a translation vector and a rotation angle;
the correcting calibrated spatial position data between the head-mounted display device and the eyes according to the movement information comprises:
correcting calibrated spatial position data between the image capture unit and the eyes according to the translation vector and/or the rotation angle.

10. The eye-tracking method according to claim 5, wherein the head-mounted display device comprises an image capture unit, the movement information comprises at least one of a translation vector and a rotation angle;
the correcting calibrated spatial position data between the head-mounted display device and the eyes according to the movement information comprises:
correcting calibrated spatial position data between the image capture unit and the eyes according to the translation vector and/or the rotation angle.

11. The eye-tracking method according to claim 1, wherein after detecting and obtaining displacement detection data by a displacement detector, the eye-tracking method further comprises:
determining whether the displacement detection data exceeds a first preset displacement threshold;
performing the step of determining movement information of the head-mounted display device relative to a user's eyes according to the displacement detection data when the displacement detection data exceeds the first preset displacement threshold; and
continuing to perform the step of detecting and obtaining displacement detection data by a displacement detector when the displacement detection data does not exceed the first preset displacement threshold.

12. The eye-tracking method according to claim 2, wherein after detecting and obtaining displacement detection data by a displacement detector, the eye-tracking method further comprises:
determining whether the displacement detection data exceeds a first preset displacement threshold;
performing the step of determining movement information of the head-mounted display device relative to a user's eyes according to the displacement detection data when the displacement detection data exceeds the first preset displacement threshold; and
continuing to perform the step of detecting and obtaining displacement detection data by a displacement detector when the displacement detection data does not exceed the first preset displacement threshold.

13. The eye-tracking method according to claim 3, wherein after detecting and obtaining displacement detection data by a displacement detector, the eye-tracking method further comprises:
determining whether the displacement detection data exceeds a first preset displacement threshold;
performing the step of determining movement information of the head-mounted display device relative to a user's eyes according to the displacement detection data when the displacement detection data exceeds the first preset displacement threshold; and
continuing to perform the step of detecting and obtaining displacement detection data by a displacement detector when the displacement detection data does not exceed the first preset displacement threshold.

14. The eye-tracking method according to claim 4, wherein after detecting and obtaining displacement detection data by a displacement detector, the eye-tracking method further comprises:
determining whether the displacement detection data exceeds a first preset displacement threshold;
performing the step of determining movement information of the head-mounted display device relative to a user's eyes according to the displacement detection data when the displacement detection data exceeds the first preset displacement threshold; and
continuing to perform the step of detecting and obtaining displacement detection data by a displacement detector when the displacement detection data does not exceed the first preset displacement threshold.

15. The eye-tracking method according to claim 5, wherein after detecting and obtaining displacement detection data by a displacement detector, the eye-tracking method further comprises:
determining whether the displacement detection data exceeds a first preset displacement threshold;
performing the step of determining movement information of the head-mounted display device relative to a user's eyes according to the displacement detection data when the displacement detection data exceeds the first preset displacement threshold; and
continuing to perform the step of detecting and obtaining displacement detection data by a displacement detector when the displacement detection data does not exceed the first preset displacement threshold.

16. The eye-tracking method according to claim 6, wherein after detecting and obtaining displacement detection data by a displacement detector, the eye-tracking method further comprises:
determining whether the displacement detection data exceeds a first preset displacement threshold;
performing the step of determining movement information of the head-mounted display device relative to a user's eyes according to the displacement detection data when the displacement detection data exceeds the first preset displacement threshold; and
continuing to perform the step of detecting and obtaining displacement detection data by a displacement detector when the displacement detection data does not exceed the first preset displacement threshold.

17. The eye-tracking method according to claim 11, wherein after detecting and obtaining displacement detection data by a displacement detector, the eye-tracking method further comprises:
outputting error warning information when the displacement detection data exceeds a second preset displacement threshold, wherein the second preset displacement threshold is greater than the first preset displacement threshold.

18. An eye-tracking apparatus, wherein the eye-tracking apparatus comprises a memory and a processor;
the memory is configured to store a computer program;
the processor is configured to execute the computer program and, when executing the computer program, implement the steps of the eye-tracking method according to claim 1.

19. A head-mounted display device, wherein the head-mounted display device comprises the eye-tracking apparatus according to claim 18.

20. A computer-readable storage medium, wherein the computer-readable storage medium stores a computer program, and the computer program, when executed by a processor, implements the steps of the eye-tracking method according to claim 1.
